# EUROPÄISCHE PATENTSCHRIFT

(11) **EP 0 957 066 B1**
(45) Veröffentlichungstag und Bekanntmachung des Hinweises auf die Patenterteilung: **20.04.2005**
(21) Anmeldenummer: 98105346.5
(22) Anmeldetag: 24.03.1998
(51) Int. Cl.: C02F 1/00, C02F 1/52, C02F 1/42, C02F 5/02

(54) **Verfahren zum Fällen oder Ausflocken von Inhaltsstoffen aus Lösungen**
Process for precipitating or flocculating substances from solutions
Procédé de précipitation et floculation de substances contenues dans des solutions

(43) Veröffentlichungstag der Anmeldung: 17.11.1999
(73) Patentinhaber: WATERCRYST chemiefreie Wasserbehandlung GmbH & Co. KG, 6175 Kematen (AT)
(72) Erfinder: Leiter, Klaus, 6176 Völs (AT); Walder, Gerhard, 6170 Zirl (AT)
(74) Vertreter: Hefel, Herbert, Dipl.-Ing.

(56) Entgegenhaltungen:
- EP-A- 0 544 225
- DE-A- 3 534 472
- DE-A- 4 400 982
- US-A- 4 772 307

## Beschreibung

Die Erfindung betrifft ein Verfahren zum Fällen von Inhaltsstoffen aus Lösungen, wobei die Lösung mit mindestens einem Ionenaustauschermaterial in Kontakt gebracht wird.

Störende ionische Wasserinhaltsstoffe lassen sich entfernen, indem man diese in die Form eines schwerlöslichen Salzes bzw. Minerals überführt und damit fällt. Viele Metallionen, wie z. B. Ca²⁺, Mg²⁺, Fe²⁺, Me²⁺-Ionen, lassen sich in der Form schwerlöslicher Hydroxide fällen; solche Reaktionen lassen sich über den pH-Wert steuern.

Ca²⁺-Ionen im Wasser werden großtechnisch entfernt, indem man diese als CaCO₃ (Kalk) fällt (Entkarbonisierung). Diese Reaktion wird ebenfalls über den pH-Wert gesteuert.

Eng mit der Fällung von Wasserinhaltsstoffen verbunden ist der Begriff der Flockung und Sedimentation; denn das Entfernen der (gefällten) Wasserinhaltsstoffe setzt voraus, daß man diese auch vom Wasser trennen kann. Bei der Flockung bzw. Sedimentation ist es wesentlich, wie die gefällten Produkte weiterwachsen und/oder agglomerieren können. Durch Zugabe von bestimmten Salzen (Aluminiumsalze, Eisensalze) läßt sich dieses Verhalten steuern.

Bei den herkömmlichen Verfahrenstechniken ist es schwierig, bei der Einbringung des Fällungsmittels eine lokale Überdosierung zu vermeiden (beispielsweise beim Hinzudosieren von Natronlauge oder beim Auflösen von Natriumhydroxid Plätzchen). Eine lokale Überdosierung kann zur Fällung von an sich weniger löslichen Wasserinhaltsstoffen führen, die dann als verschleppter Feststoffanteil in nachfolgenden Fällungsprozeß schlecht kontrollierbare Bedingungen erzeugen.

Aus der DE-A 35 34 472 ist ein Verfahren der eingangs genannten Art bekannt, bei welchem zur Teilenthärtung von Wasser eine Mischung aus Calciumhydroxid und Zeolithen eingesetzt wird.

Aufgabe der Erfindung ist es, eine verbessertes Verfahren zum Fällen von Inhaltsstoffen aus Lösungen, insbesondere Wasser, anzugeben.

Erfindungsgemäß geling dies durch ein Verfahren mit den Merkmalen des Patentanspruchs 1. Ionenaustauschermaterialien werden zwar in der Wasser- bzw. Abwasseraufbereitung verwendet, um unerwünschte Ionen gegen erwünschte Ionen oder für den jeweiligen Verwendungszweck weniger störende Ionen auszutauschen. Bekannt sind beispielsweise Enthärtungsanlagen, die mittels Kationenaustauschern Ca²⁺- und/oder Mg²⁺-Ionen im Austausch gegen Na⁺ oder H⁺-Ionen an sich binden; mit Anionenaustauschem (zumindest in der Cl⁻- oder OH⁻-Form) lassen sich unerwünschte Anionen (NO₃-, HCO₃-, etc.) aus dem Wasser entfernen. Bekannt sind auch Verfahren, mit denen man Cu²⁺-Ionen oder Schwermetallionen über Ionenaustausch aus dem Wasser entfernt. All diese Verfahren haben gemeinsam, daß die aus dem Wasser entfernten Ionen an das Harz gebunden werden; ist die Kapazität des Harzes erschöpft, muß es regeneriert werden; bei dem Regenerationsprozeß lassen sich beispielsweise die aufkonzentrierten Schwermetallionen aus dem Regenerat entfernen.

Neuartig ist nunmehr die Idee, ein Ionenaustauschermaterial zum Induzieren eines katalytischen Fällungsprozesses zu verwenden.

Gemäß der Erfindung kann ein speziell konditioniertes lonenaustauschermaterial als Katalysator zur Fällung von Wasserinhaltsstoffen benutzt werden. In vielen realen Lösungen liegt die Situation vor, daß die Lösung thermodynamisch gesehen bezüglich einer gelösten Phase übersättigt ist; trotzdem findet in endlichen Zeiträumen kein Ausfall statt, der die Lösung ins Gleichgewicht bringen würde. Solchen metastabilen Lösungen ermangelt es an geeigneten Wachstumsstellen, an denen der Ausfall stattfinden kann: Geeignete Wachstumsstellen sind Kristallkeime der zu fällenden Phase oder spezielle heterogene Oberflächen, die die Keimbildungsarbeit deutlich erniedrigen und so die Bildung heterogener Keime im Bereich niedriger Übersättigungen ermöglichen. Ein Beispiel für eine solche Lösung ist Wasser, das bezüglich Kalk übersättigt ist.

Es ist bekannt geworden, daß biologische Systeme (Muscheln, Algen, etc.) mit Hilfe bestimmter funktioneller Gruppen in der Lage sind, gezielte Kristallkeimbildung auszulösen. Insbesondere wurde gefunden, daß die Carboxylatgruppe bestimmter Carbonsäuren (Stearinsäure, etc. ) Kalkkristallkeimbildung induziert. Als Mechanismus dieser Reaktion wird vermutet, daß Carboxylatgruppen zunächst Ca²⁺-Ionen aus dem Wasser an sich binden und erst diese Kombination in der Lage ist, die Kalkkristallkeimbildung auszulösen.

Ionenaustauschermaterialien erhalten ihre spezifischen Eigenschaften ebenfalls durch bestimmte funktionelle Gruppen: Starksauere Ionenaustauscher tragen als aktive funktionelle Gruppen beispielsweise die Sulfonatgruppe; schwachsauere Ionenaustauscher haben als aktive funktionelle Gruppen beispielsweise die Carboxylatgruppe (COO⁻).

Belädt man die Carboxylatgruppe eines schwachsaueren Ionenaustauschermaterials über einen Beladungsprozeß vorzugsweise vollständig mit Ca²⁺-Ionen, so ist dieses beladene Material dazu geeignet, um an seiner Oberfläche in wäßrigen, kalkhaltigen Lösungen auf katalytischem Wege CaCO₃-Kristallkeime zu bilden.

Ein solcherart konditioniertes schwachsaueres Ionenaustauschermaterial kann beispielsweise als Nukleator und Filter-Pellet in herkömmlichen Entkarbonisierungslagern verwendet werden; weiters zur Steigerung der Keimbildungsrate und damit der Leistung in dem in der deutschen Patentanmeldung DE 19606633 A1 beschriebenen Verfahren und Vorrichtung.

Die katalytische Effizienz ist abhängig von der Bindungsstärke (elektrostatische Assoziation) zwischen Carboxylatgruppe und dem Ca²⁺-Ion: Eine zu starke Bindung würde die für die Keimbildung notwendige Assoziation von Carbonationen aus der Lösung nicht ermöglichen; eine zu lose Verbindung würde zum Verlust des Ca²⁺ und damit zur Zerstörung des katalytischen Komplexes führen. Die elektrostatische Assoziation von Carboxylatgruppe und Ca²⁺-Ion an der Grenzfläche lonenaustauschermaterial/Wasser wird durch ein elektrisches Feld an der Grenzfläche beeinflußt. Die katalytische Leistungsfähigkeit dieser speziell beladenen Ionenaustauschermaterialien wird folglich gesteigert, wenn man diese beispielsweise auf die in der internationalen Anmeldung WO 95/26931 beschriebenen Elektroden aufbringt oder diese daraus herstellt und so die funktionellen Gruppen mit dem dort beschriebenen intrinsischen elektrischen Feld geeignet moduliert bzw. einstellt.

### ANWENDUNGSBEISPIELE

Großtechnisch wird die Entkarbonisierung von kalkhaltigem Wasser herkömmlicherweise dadurch realisiert, daß man durch Zugabe bestimmter Chemikalien (Kalkmilch, Natronlauge, Soda) den pH-Wert des Wassers anhebt und damit das Kalk-Kohlensäurengleichgewicht stark in die Übersättigung verschiebt. Die einsetzende homogene Keimbildung erzeugt Kalkkristallkeime, an denen der im Wasser gelöste Kalk ausfällt (Mg²⁺-Ionen fallen als Mg(OH)₂ aus).

Der Verfahrenserfolg ist empfindlich abhängig von der Art der Prozeßführung:
◆ Die Verwendung von Natronlauge zur pH-Wertanhebung ist problematisch, da es am Dosierort der Natronlauge lokal zu einer extremen pH-Wertanhebung kommt, die zum Ausfall unerwünschter Hydroxide führen kann. Diese Hydroxide, beispielsweise Ca(OH)₂ -Kolloide, werden als Festkörper in das Prozeßwasser verschleppt und Erschweren die nach dem Entkarbonisierungsprozeß notwendige pH-Werteinstellung.
◆ Die Probleme bei der Verwendung von Kalkmilch (Ca(OH)₂) liegen in der Zubereitung der Dosierlösung und in der Dosierung: Es ist praktisch unmöglich, eine Dosierlösung herzustellen, die frei von Ca(OH)₂-Kolloiden ist. Werden diese Kolloide in der Entkarbonisierungsstufe nicht vollständig aufgelöst, so bilden diese ein großes Problem bei der in der Folge notwendigen pH-Wertabsenkung.

Die Dosierung von Kalkmilch setzt dem Wasser zusätzliche Ca²⁺-ionen zu, die im nachfolgenden Ausfallprozeß nur zum Teil mitgefällt werden; oft muß zusätzliches Karbonat (in der Form von Soda - Na₂CO₃) hinzudosiert werden, um die Ca²⁺-Ionen durch Fällung hinreichend entfernen zu können. Damit kommt es aber auch zu einer unerwünschten Erhöhung des Na⁺-Gehaltes im Wasser.
◆ Ziel einer optimalen Prozeßführung ist weiters eine kontrollierte Keimbildungsrate; zu viele Kristallkeime konkurrieren in ihrem Wachstum und wachsen nur zu kleinen Kalkkristallen heran, die nur schwierig vom Prozeßwasser abgetrennt werden können (zu geringe Sedimentationsgeschwindigkeit, aufwendiges Filtrieren).

In der Fig. 1 findet man ein Schema einer Entkarbonisierungsanlage, die auf Basis von starkbasischen Anionenaustauschem arbeitet, gemäß einer nicht beanspruchten Ausführungsform.

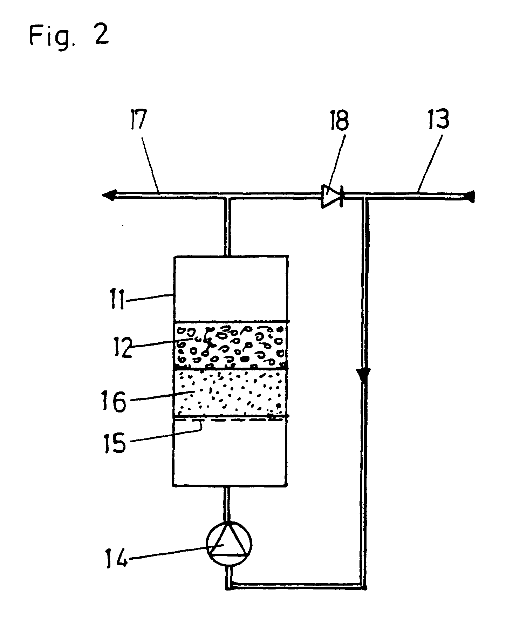

Die Fig. 2 zeigt eine erfindungsgemäße Vorrichtung zur Erzeugung von Impfkristallen. Die Fig. 3 und 4 zeigen weitere Ausführungsbeispiele einer zur Durchführung eines erfindungsgemäßen Verfahrens geeigneten Vorrichtung.

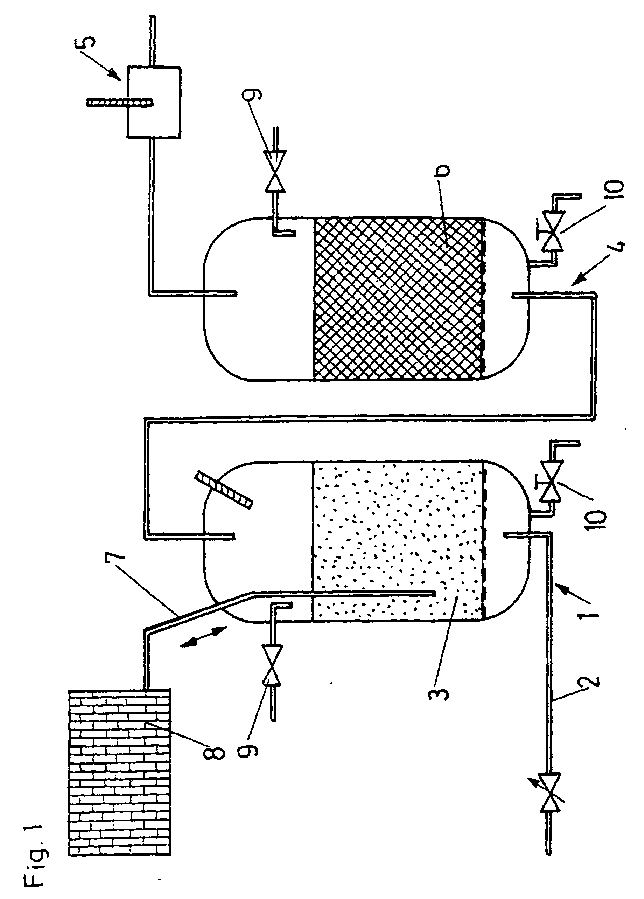

Zunächst wird anhand von Fig. 1 eine nicht beanspruchte Ausführungsform erläutert:

In der Entkarbonisierungsstufe 1 der Fig. 1 strömt das Rohwasser über die Leitung 2 zunächst durch ein Bett aus starkbasischem Ionenaustauschermaterial 3; über lonenaustausch wird der pH-Wert des Rohwassers auf einen pH-Wert zwischen 9 und 10 (je nach Entkarbonisierungsleistung) angehoben. Die Steuerung des pH-Wertes erfolgt über die mittlere Kontaktzeit des Rohwassers mit dem Ionenaustauschermaterial 3 (Durchfluß, Harzmenge). Durch die pH-Wertanhebung kommt es zur homogenen Keimbildung und in der Folge zur Kalkfällung. Der gefällte Kalk wird in der anschließenden Filterstufe 4 nach Stand der Technik über Sedimentation und/oder Filtration vom Prozeßwasser getrennt (Sedimentationsfilter 6). In einer dritten Stufe 5 wird gegebenenfalls der pH-Wert eingestellt.

Um den kontinuierlichen Betrieb einer solchen Anlage zu ermöglichen, ist es zweckmäßig, das Ionenaustauschermaterial kontinuierlich zu regenerieren. Dies geschieht am besten dadurch, daß ein Teil des teilweise verbrauchten Materials 3, beispielsweise über eine Saug- und Zufuhrleitung 7 aus dem Bett entfernt wird. Die entfernte Menge wird durch eine entsprechende Menge frisch regeneriertem Ionenaustauschermaterial 3 ersetzt, wieder aufbereitet (regeneriert wird in der Regenerationsanlage 8 z. B. mit Säuren oder elektrolytisch, dabei kann gleichzeitig desinfiziert und gewaschen werden) und steht für die weitere Nutzung zur Verfügung.

Zweckmäßigerweise betreibt man die Anlage (Stufe 1) im Wirbelbettbetrieb. Mit der Ionenaustauschermaterialzu- und abführeinrichtung wird periodisch oder kontinuierlich verbrauchtes Ionenaustauschermaterial dem Wirbelbett entnommen und durch frisches Harz ersetzt. Über Rückspülleitungen 9 und Spülauslässe 10 ist eine Reinigung möglich.

Um bei einem harten Wasser mit einer Gesamthärte von 4 mmol/l, einem DIC-Gehalt von ebenfalls 4 mmol/l und einem pH-Wert von 8.0, den pH-Wert auf ca. 9.5 anzuheben, bedarf es ca. 1 mmol/l Lauge bzw. OH⁻-Ionen. Ein starkbasischer Anionenaustauscher in der OH⁻ -Form, beispielsweise Lewait MP 600 der Firma Bayer/5/ hat eine Kapazität von typischerweise 1 val/l - geht man von einem Bedarf von 1 mmol/l OH⁻-Ionen pro Liter Rohwasser aus, so lassen sich pro Liter Harz ca. 1000 l entsprechend aufbereiten.

Die für eine bestimmte Behandlungsleistung notwendige Harzmenge ist abhängig von der zur pH-Wertanhebung notwendigen Kontaktzeit Harz - Wasser. Bei dem oben beschriebenen Wasser ist für die pH-Wertanhebung auf 9.5 eine Kontaktzeit von ca. 30 s ausreichend. Für eine Entkarbonisierungsanlage mit einer Leistung von 100 m³/h ergibt sich damit eine notwendige Harzmenge von ca. 850 I.

Im Folgenden werden erfindungsgemäße Ausführungsformen beschrieben:

### Katalytische Fällung von Kalk

Ein mit Ca²⁺-Ionen vorzugsweise vollständig beladenes schwachsaueres Ionenaustauschermaterial, beispielsweise ein Harz Lewait CNP 80 der Firma Bayer, löst in kalkhaltigen Lösungen auf katalytischem Wege Kalkkristallkeimbildung aus.

Letzeres Harz kann beispielsweise verwendet werden, um die oben beschriebene Entkarbonisierung zu unterstützen oder zu ersetzen. Bei der Prozeßführung der Entkarbonisierung ist es günstig, den pH-Wert nicht zu hoch werden zu lassen um eine nicht zu hohe Kristallkeimkonzentration zu erhalten. Ein zu hoher pH-Wert erhöht auch den Aufwand einer anschließenden pH-Wertabsenkung; eine zu hohe Kristallkeimdichte führt zu vielen kleinen Kalkkristallen, die man nur schwer vom Wasser abtrennen kann. Ein schwachsaueres Harz in der Ca²⁺-Form bildet auch bei niedrigeren Übersättigungen Kristallkeime; es ist mit der Verwendung dieses Harzes möglich, den Prozeß so zu führen, daß die pH-Werte nicht über den pH-Wert 9 gesteuert werden müssen und damit die Übersättigung in einem Bereich bleibt, bei der nicht schlagartig eine hohe Kristallkeimdichte erzeugt wird.

Das konvertierte CNP 80 läßt sich trocknen, mahlen und als dünne Schicht auf einen Träger, beispielsweise auf die in der internationalen Anmeldung WO 95/26931 beschriebenen Elektroden, aufbringen. Mit dem intrinsischen Feld einer solcherart beschichteten Elektrode läßt sich die katalytische Aktivität der funktionellen Gruppen steuern; auf diese Weise läßt sich gezielt Kristallkeimbildung auslösen - dieser Effekt läßt sich in der Wasseraufbereitung verwenden, um eine definierte Menge von Kalkkristallkeimen dem Prozeßwasser zuzuführen.

Dabei ist die Erfindung keineswegs auf bekannte Ionenaustauschermaterialien eingeschränkt. Wesentlich ist nur, daß das verwendete Material aktive Gruppen tragen kann, die in der Lage ist, Ionen aus der Lösung aufzunehmen und dafür andere abzugeben. Diese Gruppen müssen also eine endliche Dissoziatonskonstante in der betrachteten Flüssigkeit haben.

Damit die Materialien katalytische Eigenschaften aufweisen, ist es zusätzlich von Vorteil, wenn die Materialien verwendet werden, die eine für die Kristallisation günstige Mikrostruktur aufweisen. Dies ist beispielsweise dann gegeben, wenn die Grundmatrix, auf die die Gruppen aufgebracht werden, ein zweidimensionales Template ist, welches eine gute Übereinstimmung mit den Gitterkonstanten des zu bildenden Kristalls aufweist, sodaß elektrostatische und sterochemische Voraussetzungen wie im zu bildenden Kristall herrschen. Die aktiven Gruppen sind dann dermaßen zu präparieren, daß zumindest eine ionische Komponente der zu kristallisierenden Substanz absorbiert ist. Diese ist dann in übersättigten Lösungen in der Lage, Kristallkeimbildungen am Interface auszulösen.

In dieser Hinsicht geeignete Materialien (Matrix bzw. Trägermaterialien) sind vorzugsweise Polyacrylat, Polystyrol, Aktivkohle (als Granulat oder poröse Halbfertigteile in Form von Platten, Zylindern, Hohlzylindern), die vorzugsweise mit einer Carboxylatgruppe funktionalisiert werden können. Die Carboxylatgruppe wird aufgrund des Herstellungsprozesses meist in der H⁺-Form abgesättigt. Um dieses Material beispielsweise zur Kristallisation von Kalk katalytisch zu nutzen, werden die H⁺-lonen durch Kationen schwer löslicher Salze (beispielsweise Ca²⁺, Mg²⁺, Fe²⁺, Cu²⁺ usw.) ersetzt, sodaß letztlich ein Ionenaustauschermaterial in der jeweiligen Kationen-Form vorliegt (Ca²⁺ Form, Mg²⁺ Form, Fe²⁺ Form, Cu²⁺ Form usw.). Die geometrische Lage der Ca²⁺ -Ionen auf der Oberfläche einer Polyacrylat-Harzkugel des schwachsaueren Ionenaustauscherharzes Lewatit CNP80 der Fa. Bayer, wird durch die molekulare Geometrie der Polyacrylatmatrix bestimmt. Die so erzeugte Oberfläche besitzt nun gute elektrostatische und stereochemische Eigenschaften für die Bildung von CaCO₃-Kristallen.

Wie bereits oben erwähnt, sind die elektrostatischen und stereochemischen Eigenschaften für die katalytisch induzierte Bildung von Kristallkeimen an der jeweiligen Oberfläche von Bedeutung. Die stereochemischen und weitgehend auch die elektrischen Eigenschaften werden über die Struktur des Grundmaterials (z. B. Polyacrylat), auf dem die aktiven Gruppen sitzen, eingestellt.

Die elektrostatischen Eigenschaften lassen sich zusätzlich durch ein externes elektrostatisches Feld beeinflussen. Auf einfache Weise kann dies durch Einbringen des Katalysatormaterials zwischen zwei felderzeugende Elektroden umgesetzt werden. Konkret kann man dazu die Behälterwand (beispielsweise eines Wirbelbettreaktors) als Kathode schalten und zentrisch im Tank eine Anode anbringen.

Eine besonders elegante Variante ergibt sich aber, wenn man das Katalysationsmaterial als dünne Schicht auf eine Elektrode, wie sie beispielsweise in der internationalen Anmeldung WO 95/26931 beschrieben ist, aufbringt und mittels des intrinsischen Feldes die elektrostatischen Eigenschaften der katalytischen Grenzfläche einstellt.

### Weitere Anwendungsbeispiele

### Beispiel 1

Ein derartiger Katalysator kann zur Bildung von Impfkristallen verwendet werden, die der Wasserstrom im anschließenden Installations- und Rohrleitungsystem verteilt. Als Fällungsprodukt fallen somit Impfkristalle an. Es ist bekannt, daß derartige Kristallkeime durch ihren Wachstumsprozeß die Ablagerung an Rohrwänden oder Heizregistern von Warmwasserbereitem verhindern können. Zum Schutz einer Trinkwasserinstallation im Haushalt kann beispielsweise ein Wirbelbettreaktor 11 (Rauminhalt ca. 6 - 8 Liter, Durchmesser 15 cm, Höhe 60 cm) mit einer Katalysatorfüllung (z. B. 4 Liter) eingesetzt werden. Das Katalysatorbett 12 wird beispielsweise von einem schwachsaueren Kationenaustauscher in der Ca²⁺-form (z. B. Lewait CNP90 der Fa. Bayer) gebildet. Das Rohwasser strömt vom Zulauf 13 über eine Pumpe 14 und einen Düsenboden 15 sowie eine Stützschicht 16 aus Quarzsand durch den Katalysator 12. Über die Pumpe 14 wird das Katalysatorbett permanent in Schwebe gehalten (Zirkulation) über das Rückschlagventil 18 und die Pumpe 14. Durch die ständige Strömung und Reibung der Katalysatorkörner wird ein Verblocken der Körner verhindert und zusätzlich die Ablösung der Kristallkeime von der Katalysatoroberfläche unterstützt. Die Kristallkeime werden bei Wasserentnahme (Leitung 17) als Impfkristalle in das angeschlossene Installationssystem ausgetragen.

### Beispiel 2

Ein derart präpariertes katalytisch wirkendes Material ist besonders gut als Bodensatz für ein im deutschen Patent DE 19606633 A1 beschriebenes Verfahren zur Behandlung von Wasser.

Bei der Entkarbonisierung von stark kalkhaltigen Trinkwassem über ph-Wert Anhebung durch Ca(OH)₂ (typische ph-Werte >12) sind folgende Verfahrensnachteile bekannt:
- Hoher Trübstoffgehalt im Überlaufwasser des Reaktors und damit die Notwendigkeit einer nachgeschaltenen Filtrationsstufe.
- Hoher ph-Wert des Produktwassers muß aufwendig gesenkt werden.
- Hoher Chemikalienverbrauch.

Durch Verwendung eines katalytisch wirkenden Materials (z. B. schwachsauerer Kationenaustauscher in der Ca²⁺-Form) im Reaktor können diese oben angeführten Nachteile praktisch völlig vermieden werden. Der pH-Wert muß nur mehr gering (auf max. 9) angehoben werden, um an den katalytischen Oberflächen eine ausreichende Keimbildung zu erzeugen. In der Folge können vor allem Chemikalien, eine Filtrationsstufe bzw. Neutralisationsstufe eingespart werden.

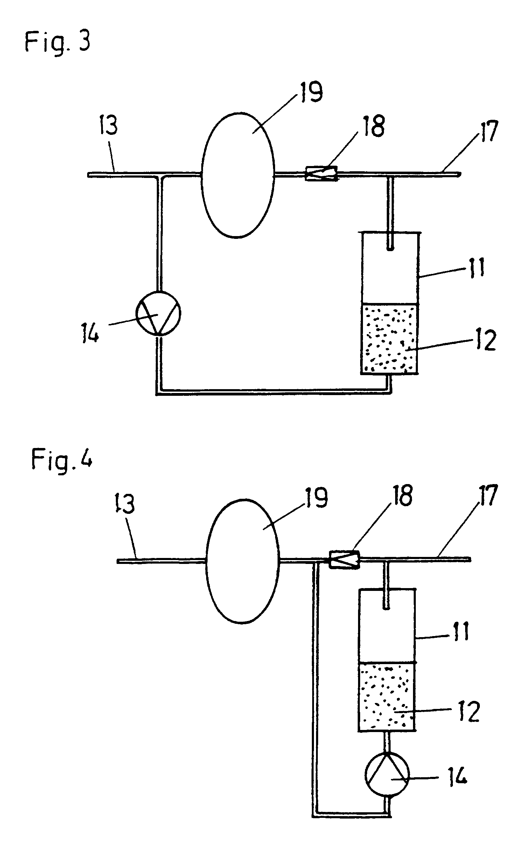

Bei den in den Fig. 3 und 4 dargestellten Ausführungsbeispielen ist die Wasserbehandlung mit einem katalytisch wirkenden Ionenaustauschermaterial 12, welches in einem Behälter 11 angeordnet ist, mit einem vorzugsweise physikalischen Wasserbehandlungsgerät 19 kombiniert. Ein solches physikalisches Wasserbehandlungsgerät kann beispielsweise elektrostatisch arbeiten. Vorzugsweise eignen sich Wasserbehandlungsgeräte, wie sie in der internationalen Anmeldung WO 95/26931 und der deutschen Patentanmeldung DE 19606633 beschrieben sind.

Günstigerweise wird das zu behandelnde Wasser, insbesondere zur Entkalkung, über eine Pumpe 14 im Kreislauf durch das Ionenaustauschermaterial geführt. Das Wasserbehandlungsgerät 19 kann entweder in diesen Kreislauf eingebaut sein (Fig. 3) oder diesen Kreislauf nachgeschaltet sein (Fig. 4).

## Patentansprüche

1. Verfahren zum Fällen von Inhaltsstoffen aus Lösungen, wobei die Lösung mit mindestens einem Ionenaustauschermaterial in Kontakt gebracht wird, **dadurch gekennzeichnet, dass** das Ionenaustauschermaterial an seiner Oberfläche funktionelle Gruppen aufweist, die mit Gegenionen beladen sind, wobei die Fällung katalytisch, d. h. ohne einen Ionenaustausch des Gegenions mit Ionen aus der Lösung, bewirkt wird.

2. Verfahren nach Anspruch 1, **dadurch gekennzeichnet, dass** die Gegenionen Kationen sind.

3. Verfahren nach Anspruch 2, **dadurch gekennzeichnet, dass** die Gegenionen Ca²⁺-, Fe²⁺- oder Cu²⁺-Ionen sind.

4. Verfahren nach einem der Ansprüche 1 bis 3, **dadurch gekennzeichnet, dass** die funktionellen Gruppen zumindest mit einer ionischen Komponente der zu kristallisierenden Substanz beladen sind.

5. Verfahren nach Anspruch 4, **dadurch gekennzeichnet, dass** man zur Kalkkristallkeimbildung in Wasser auf katalytischem Wege ein vorzugsweise schwachsaueres Ionenaustauschermaterial in der Ca²⁺-Form verwendet.

6. Verfahren nach einem der Ansprüche 1 bis 5, **dadurch gekennzeichnet, dass** man ein schwachsaueres Ionenaustauschermaterial verwendet, dessen funktionelle Gruppen Carboxylatgruppen (COO⁻) sind, welche die Gegenionen, vorzugsweise Ca²⁺, tragen.

7. Verfahren nach einem der Ansprüche 1 bis 6, **dadurch gekennzeichnet, dass** das Ionenaustauschermaterial im Bereich seiner mit der Lösung in Kontakt stehenden Oberfläche einem vorzugsweise einstellbaren elektrischen Feld ausgesetzt wird.

8. Verfahren nach Anspruch 7, **dadurch gekennzeichnet, dass** die feldererzeugenden Elektroden im bzw. am Ionenaustauschermaterial angeordnet werden, wobei sich zwischen ihnen keine Lösung befindet.

9. Verfahren nach einem der Ansprüche 1 bis 8, **dadurch gekennzeichnet, dass** die zu behandelnde Lösung - vorzugsweise über eine Pumpe - im Kreislauf am Ionenaustauschermaterial vorbei oder durch dieses hindurch geführt wird.

10. Verfahren nach einem der Ansprüche 1 bis 9, **dadurch gekennzeichnet, dass** die zu behandelnde Lösung, vorzugsweise Wasser, einerseits am Ionenaustauschermaterial vorbei bzw. durch dieses hindurch und andererseits durch ein vorzugsweise physikalisches Wasserbehandlungsgerät geführt wird.

11. Verfahren nach einem der Ansprüche 1 bis 10, **dadurch gekennzeichnet, dass** die zu fällenden Inhaltsstoffe in Wasser enthaltene Inhaltsstoffe sind.

12. Verfahren nach einem der Ansprüche 1 bis 11, **dadurch gekennzeichnet, dass** das Ionenaustauschermaterial aus Polyacrylat, Polystyrol oder Aktivkohle besteht, dessen Oberfläche mit den funktionellen Gruppen versehen ist.

13. Verfahren nach einem der Ansprüche 1 bis 12, **dadurch gekennzeichnet, dass** die gefällten Inhaltsstoffe in einem weiteren Schritt aus der Lösung entfemt werden.

14. Verfahren nach einem der Ansprüche 1 bis 13, **dadurch gekennzeichnet, dass** durch die Fällung der Inhaltsstoffe Impfkristalle gebildet werden.

## Claims

1. Process for precipitating substances from solutions, wherein the solution is brought into contact with at least one ion exchanger material, **characterized in that** the ion exchanger material has, on its surface, functional groups which are charged with counter-ions, the precipitation being effected catalytically, i.e. without ion exchange of the counter-ions with ions from the solution.

2. Process according to claim 1, **characterized in that** the counter-ions are cations.

3. Process according to claim 2, **characterized in that** the counter-ions are Ca²⁺, Fe²⁺ or Cu²⁺ ions.

4. Process according to any one of claims 1 to 3, **characterized in that** the functional groups are charged with at least one ionic component of the substance to be crystallized.

5. Process according to claim 4, **characterized in that** a preferably weakly acidic ion exchanger material in the Ca²⁺ form is used for lime seed crystal formation in water by the catalytic route.

6. Process according to any one of claims 1 to 5, **characterized in that** a weakly acidic ion exchanger material of which the functional groups are carboxylate groups (COO⁻) which carry the counter-ions, preferably Ca²⁺, is used.

7. Process according to any one of claims 1 to 6, **characterized in that** the ion exchanger material is exposed to a preferably adjustable electrical field in the region of its surface in contact with the solution.

8. Process according to claim 7, **characterized in that** the field-generating electrodes are arranged in or on the ion exchanger material, no solution being between them.

9. Process according to any one of claims 1 to 8, **characterized in that** the solution to be treated is passed - preferably via a pump - in circulation past the ion exchanger material or through this.

10. Process according to any one of claims 1 to 9, **characterized in that** the solution to be treated, preferably water, is passed on the one hand past the ion exchanger material or through this and on the other hand through a preferably physical water treatment apparatus.

11. Process according to any one of claims 1 to 10, **characterized in that** the substances to be precipitated are substances contained in water.

12. Process according to any one of claims 1 to 11, **characterized in that** the ion exchanger material comprises polyacrylate, polystyrene or active charcoal, the surface of which is provided with the functional groups.

13. Process according to any one of claims 1 to 12, **characterized in that** the precipitated substances are removed from the solution in a further step.

14. Process according to any one of claims 1 to 13, **characterized in that** seed crystals are formed by the precipitation of the substances.

## Revendications

1. Procédé de précipitation des ingrédients à partir de solutions, amenées en contact avec au moins un matériau échangeur d'ions,
**caractérisé en ce que**
le matériau échangeur d'ions comporte à sa surface des groupes fonctionnels chargés de contre-ions, la précipitation s'effectuant de manière catalytique, c'est-à-dire sans échange d'ions entre le contre-ion et les ions de la solution.

2. Procédé selon la revendication 1,
**caractérisé en ce que**
les contre-ions sont des cations.

3. Procédé selon la revendication 2,
**caractérisé en ce que**
les contre-ions sont des ions Ca²⁺, Fe²⁺ ou Cu²⁺.

4. Procédé selon l'une des revendications 1 à 3,
**caractérisé en ce que**
les groupes fonctionnels sont chargés d'au moins un composant ionique de la substance à cristalliser.

5. Procédé selon la revendication 4,
**caractérisé en ce que**
pour la formation de germes cristallins de chaux dans l'eau par voie catalytique, on utilise un matériau échangeur d'ions, de préférence faiblement acide, de la forme Ca²⁺.

6. Procédé selon l'une des revendications 1 à 5,
**caractérisé en ce qu'**
on utilise un matériau échangeur d'ions faiblement acide dont les groupes fonctionnels sont des groupes carboxylate (COO⁻) qui portent les contre-ions, et de préférence du Ca²⁺.

7. Procédé selon l'une des revendications 1 à 6,
**caractérisé en ce que**
le matériau échangeur d'ions est exposé, au voisinage de sa surface se trouvant en contact avec la solution, à un champ électrique de préférence réglable.

8. Procédé selon la revendication 7,
**caractérisé en ce que**
les électrodes produisant le champ sont disposées dans (ou sur) le matériau échangeur d'ions, aucune solution n'étant présente entre elles.

9. Procédé selon l'une des revendications 1 à 8,
**caractérisé en ce que**
la solution à traiter est guidée - de préférence à l'aide d'une pompe - dans un cycle, de manière à passer à côté du matériau échangeur d'ions ou à travers celui-ci.

10. Procédé selon l'une des revendications 1 à 9,
**caractérisé en ce que**
la solution à traiter, de préférence de l'eau, est guidée d'un côté de manière à passer à côté du matériau échangeur d'ions ou à travers celui-ci, et d'un autre côté de manière à passer à travers un appareil de traitement de l'eau, de préférence physique.

11. Procédé selon l'une des revendications 1 à 10,
**caractérisé en ce que**
les ingrédients à précipiter sont des ingrédients contenus dans de l'eau.

12. Procédé selon l'une des revendications 1 à 11,
**caractérisé en ce que**
le matériau échangeur d'ions est constitué de polyacrylate, de polystyrol ou de charbon actif dont la surface est pourvue des groupes fonctionnels.

13. Procédé selon l'une des revendications 1 à 12,
**caractérisé en ce que**
les ingrédients précipités sont enlevés de la solution dans une étape consécutive.

14. Procédé selon l'une des revendications 1 à 13,
**caractérisé en ce que**
la précipitation des ingrédients a pour effet la formation de germes.
